Europäisches Patentamt

European Patent Office

Office européen des brevets

(11) Publication number: **0 431 636 A1**

# EUROPEAN PATENT APPLICATION

(21) Application number: 90123554.9

(51) Int. Cl.⁵: **B32B 27/34**

(22) Date of filing: 07.12.90

(30) Priority: 08.12.89 JP 317706/89

(43) Date of publication of application:
12.06.91 Bulletin 91/24

(84) Designated Contracting States:
**DE GB**

(71) Applicant: **UBE INDUSTRIES LIMITED**
**12-32, 1-chome, Nishihoncho**
**Ube-shi, Yamaguchi-ken(JP)**

(72) Inventor: **Matsubara, Kenji, c/o Ube Chemical**
**Works**
**Ube Industries, Ltd., 1978-10, Kogushi**
**Ube-shi, Yamaguchi-ken(JP)**
Inventor: **Ootani, Akinori, c/o Ube Chemical**
**Works**
**Ube Industries, Ltd., 1978-10, Kogushi**
**Ube-shi, Yamaguchi-ken(JP)**
Inventor: **Nishino, Toshiyuki, c/o Ube**
**Chemical Works**
**Ube Industries, Ltd., 1978-10, Kogushi**
**Ube-shi, Yamaguchi-ken(JP)**
Inventor: **Yoshioka, Kazuhiko, c/o Ube**
**Chemical Works**
**Ube Industries, Ltd., 1978-10, Kogushi**
**Ube-shi, Yamaguchi-ken(JP)**

(74) Representative: **Kraus, Walter, Dr. et al**
**Patentanwälte Kraus, Weisert & Partner**
**Thomas-Wimmer-Ring 15**
**W-8000 München 22(DE)**

(54) Extruded multi-layer polyimide film and process for producing the same.

(57) An extruded multi-layer polyimide film comprises at least one thin layer with a thickness of not more than 10 μm comprising an aromatic polyimide derived from an aromatic tetracarboxylic acid compound and an aromatic diamine having two or more benzene rings and a base layer comprising an aromatic polyimide derived from a biphenyltetracarboxylic acid compound and a phenylene diamine, the at least one thin layer being unitarily arranged on at least one side of the base layer. Further, the extruded multi-layer polyimide film is advantageously produced by multi-layer extrusion molding, i.e., casting method of casting solution.

EP 0 431 636 A1

## SUMMARY OF THE INVENTION

An object of the present invention is to provide a multi-layer polyimide film improved in respect of adhesion which is a defect of an aromatic polyimide film having high strength and heat-resistance, the polyimide film being obtained by a casting method of casting solution using a solution of a polyamic acid derived from a biphenyltetracarboxylic acid compound and a phenylene diamine.

Another object of the present invention is to provide a novel process for producing with high reproducibility a multi-layer polyimide film such as a two-layer film or a three-layer film, which shows a good adhesion, from a solution of a polyamic acid derived from a biphenyltetracarboxylic acid compound and a phenylene diamine, and the like.

The first invention of this application provides an extruded multi-layer polyimide film which comprises:

at least one thin layer with a thickness of not more than 10 $\mu$m comprising an aromatic polyimide derived from an aromatic tetracarboxylic acid compound and an aromatic diamine having two or more benzene rings; and

a base layer comprising an aromatic polyimide derived from a biphenyltetracarboxylic acid compound and a phenylene diamine,

the at least one thin layer being unitarily arranged on at least one side of the base layer.

Further, the second invention of the application provides a process for producing an extruded multi-layer extruding polyimide film comprising the steps of:

feeding both a first aromatic polyamic acid solution and a second aromatic polyamic acid solution simultaneously to an extrusion molding machine having an extrusion molding die which is capable of forming two or more layer film, the first aromatic polyamic acid solution comprising an aromatic polyamic acid dissolved uniformly in a solvent, said aromatic polyamic acid being derived from an aromatic tetracarboxylic acid compound and an aromatic diamine having two or more benzene rings, and the second aromatic polyamic acid solution comprising an aromatic polyamic acid dissolved uniformly in a solvent, said aromatic polyamic acid being derived from a biphenyltetracarboxylic acid compound and a phenylene diamine;

extruding continuously both the solutions from an outlet of the die in the form of a thin film of at least two layers onto a planar support;

drying the extruded thin film on the support to form a self-supportable multi-layer film;

peeling the multi-layer film from the support; and

subjecting the multi-layer film to heat-treatment.

An extruded multi-layer polyimide film of the invention is improved in adhesion which is a problem of an aromatic polyimide film of the biphenyltetracarboxylic acid type having excellent heat-resistance, mechanical strength and dimensional resistance, without lowering these excellent characteristics. The improvement is attained by providing a thin layer of a specific aromatic polyimide on the above polyimide film. Therefore, by bonding a copper film to the thin layer side of the multi-layer film through an adhesive of a thermosetting resin, a copper-clad polyimide film having excellent properties is produced.

A process for producing an extruded multi-layer polyimide film of the present invention comprises steps of extruding at least two kinds of aromatic polyamic acid solutions simultaneously from a extrusion molding die for a multi-layer film such as a two-layer film or a three-layer film, and casting the polymer solutions in the form of a thin film of a multi-layer on one or both sides of a base layer to form a thin film thereon, whereby a polyimide film of multi-layer such as two-layer or three-layer having a thin polyimide layer can be industrially produced with high reproducibility.

## BRIEF DESCRIPTION OF THE INVENTION

Fig. 1a illustrates an electron micrograph of partial section of the extruded two-layer polyimide film obtained in Example 1 according to the invention.

Fig. 1b illustrates an electron micrograph of partial section of the extruded two-layer polyimide film obtained in Example 2 according to the invention.

Fig. 1c illustrates an electron micrograph of partial section of the extruded two-layer polyimide film obtained in Example 3 according to the invention.

Fig. 2 is a sectional view outlining a casting machine used in a process for producing an extruded two-layer polyimide film of the invention.

Fig. 3 and Fig. 4 are sectional views outlining dies for two-layer extrusion molding for installation in the casting machine.

## EP 0 431 636 A1

### DETAILED DESCRIPTION OF THE INVENTION

The invention is described in more detail referring to the attached drawings as below.

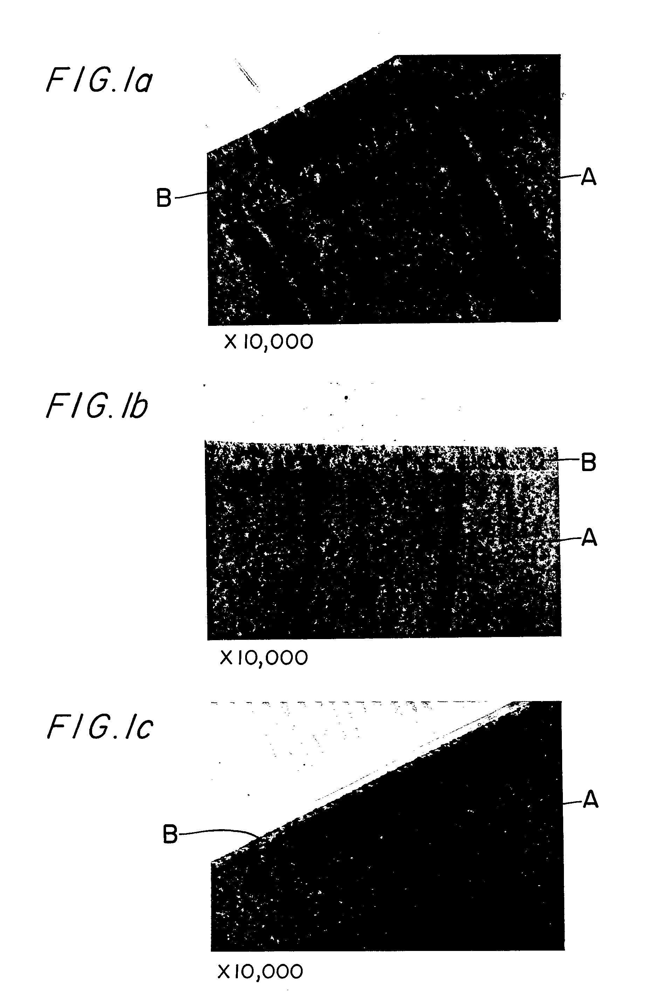

An extruded multi-layer polyimide film of the invention, for example, is produced by such a process that at least one thin layer B described below is so formed on one or both sides of a base layer A described below that both layers are combined continuously and unitarily in the direction of thickness of a film. The base layer A comprises an aromatic polyimide composed of a polymerization product of a biphenyltetracarboxylic acid compound with a phenylene diamine. The thin layer B comprises an aromatic polyimide composed of a polymerization product of an aromatic tetracarboxylic acid compound and an aromatic diamine having two or more benzene rings and has a thickness of not more than 10 μm, preferably in the range of 0.05 to 8 μm. The polyimide film of the invention comprises an extruded multi-layer polyimide film such as a two-layer film or a three-layer film (refer to, for example, the extruded two-layer polyimide film as shown in Fig. 1) produced by a multi-layer extrusion molding (casting method of casting solution) which is hereinafter described.

In the extruded multi-layer polyimide film of the invention, if the thickness of the thin layer B is too thick, an aromatic polyimide film constituting the base layer A loses its various excellent characteristics. Further, in a process for producing the multi-layer film or a step of processing the film, the extremely thick film curls so largely that its handling is apt to become difficult.

In the extruded multi-layer polyimide film of the invention, the total thickness of the film is preferably in the range of 10 to 200 μm, more preferably 15 to 150 μm and most preferably in the range of 15 to 100 μm. The thickness of the base film A is preferably in the range of 5 to 200 μm and more preferably 10 to 150 μm. Further, the rate (B/A) of the thickness of the thin layer B and that of the base layer A is preferably in the range of about 0.005 to 0.5 and more preferably about 0.01 to 0.4, from the consideration of the above-mentioned problems.

When the section of the extruded multi-layer polyimide film is observed through an electron microscope, the thin layer B is found as a belt made of scales as shown in Fig. 1, especially as a belt made of scales of a distinct bold line along the boundary area between the layer A and the layer B. However, because the extruded multi-layer polyimide film can be never peeled from each other at the boundary area, it is apparent that the two layers forms a multi-layer film of at least two layers in which both polyimides constituting the layers are strongly bonded to have substantially continuous unity.

The extruded multi-layer polyimide film of the invention may be one having a structure of three layers, in which each of the two thin layers B having the thickness of not more than 10 μm is arranged on the both sides of the base layer A. The film of three-layer structure (three-layer film) is shown in the hereinafter-given Example 4, although it is not illustrated in the drawings.

In the multi-layer films, the above-mentioned three layer film is favorable for lowering of curl of the film. It is most favorable for obtaining the most little curl that both the thin films B and B' corresponding to each of both sides of the three-layer film have similar thicknesses to each other. In more detail, the rate of the thickness of layer B and that of B' (B/B') preferably is in the range of 0.8 to 1.2, more preferably 0.9 to 1.1. Further, the three-layer film has the thin layers (B and B') having an excellent adhesion to an adhesive on its both sides. As a result, the three-layer film is suitable for bonding copper foils to both sides of the film because the foils are easily bonded to the sides through an adhesive.

An aromatic polyimide constituting the base layer A comprises an aromatic polyimide of a high molecular weight having the following composition and an excellent heat-resistance. The polyimide is obtained by polymerization-imidization of an aromatic tetracarboxylic acid compound in which a biphenyltetracarboxylic acid compound is a main component, containing preferably at least 50 molar %, and more preferably at least 60 molar %, and an aromatic diamine in which phenylenediamine is a main component, containing preferably at least 50 molar %, and more preferably at least 60 molar %. Use of the above polyimide as material of the base layer is preferable from the viewpoint of heat-resistance, mechanical strength and dimensional resistance of the resultant film.

Examples of the biphenyltetracarboxylic acid compounds include 3,3',4,4'-biphenyltetracarboxylic acid and dianhydride thereof, and 2,3,3',4-biphenyltetracarboxylic acid and dianhydride thereof. Preferable examples of other aromatic tetracarboxylic acid compounds employable in combination with the biphenyltetracarboxylic acid compounds include pyromellitic acid compounds such as pyromellitic acid and dianhydride thereof; and 3,3',4,4'-benzophenonetetracarboxylic acid and dianhydride thereof.

Examples of the above phenylenediamines include phenylene-type diamines such as o-phenylenediamine, m-phenylenediamine and p-phenylenediamine. Preferable examples of other aromatic aromatic diamines employable in combination with the phenylenediamines include diphenylether-type diamines such as 4,4'-diaminodiphenylether and 3,4'-diaminodiphenylether; and diphenylsulfone-type dia-

4

mines such as 4,4'-diaminodiphenylsulfone and 3,4'-diaminodiphenylsulfone.

As aromatic polyimides constituting the base layer A, there are mentioned the following polyimides as described in Japanese Patent Publication No. 60-42817 and Japanese Patent Provisional Publication No. 61-111359:

[A-1] polyimide described in Japanese Patent Publication No. 60-42817: produced from a polyamic acid solution which is prepared by polymerization of diamines consisting of 4,4'-diaminodipenylether (hereinafter referred to as DADE) and p-phenylenediamine (hereinafter referred to as PPD) at a molar rate (DADE/PPD) of 0 to 1 and 3,3',4,4'-biphenyltetracarboxylic acid compound in an organic polar solvent at 0 - 80 $^\circ$C.

[A-2] polyimide described in Japanese Patent Publication No. 61-11359: produced from a polyamic acid solution which is prepared by polymerization of an aromatic tetracarboxylic acid compound comprising mainly a biphenyltetracarboxylic acid (not less than 50 molar %, more preferably in the range of 60 - 90 molar %) and pyromellitic acid compound (less than 50 molar %, preferably in the range of 10 - 40 molar %) and an organic diamine comprising mainly phenylenediamine (not less than 50 molar %, preferably in the range of 60 - 95 molar %) and diaminodipenylether (less than 50 molar %, preferably in the range of 10 - 40 molar %) in equimolar amounts and an organic polar solvent.

The polyimides as described in [A-1] and [A-2] above are particularly preferred from the viewpoint of mechanical property, heat-resistance and dimensional resistance.

The aromatic polyimide constituting the thin layer B is composed of a polymerization-imidization product of an aromatic tetracarboxylic acid compound with an aromatic diamine having two or more benzene rings. Preferable examples of main ingredients constituting the aromatic tetracarboxylic acid compounds include biphenyltetracarboxylic acid, pyromellitic acid, benzophenonetetracarboxylic acid and their derivatives. Preferable examples of the aromatic diamines include diphenylether-type diamines such as 4,4'-diaminodiphenylether and 3,4'-diaminodiphenylether; diphenylmethane-type diamines such as 4,4'-diaminodiphenylmethane and 3,4,- diaminodiphenylmethane; and diphenylsulfone-type diamines such as 4,4'-diaminodiphenylsulfone and 3,4'-diaminodiphenylsulfone.

The aromatic polyimide constituting the thin layer B is obtained by polymerizing an aromatic tetracarboxylic acid consisting mainly of biphenyltetracarboxylic acid or its derivative (preferably not less than 60 molar %, more preferably not less than 80 molar %) and an aromatic diamine consisting mainly of an aromatic diamine having a plural benzene rings (preferably not less than 50 molar %, more preferably not less than 60 molar %). Further, the glass transition temperature of the polyimide advantageously is in the range of 250 to 400 $^\circ$C, preferably 260 to 360 $^\circ$C. The use of polyimide having a glass transition temperature in the above range is well from the viewpoint of enhancement of affinity to (compatibility with) the base layer A and adhesion to a thermosetting adhesive for bonding a copper foil.

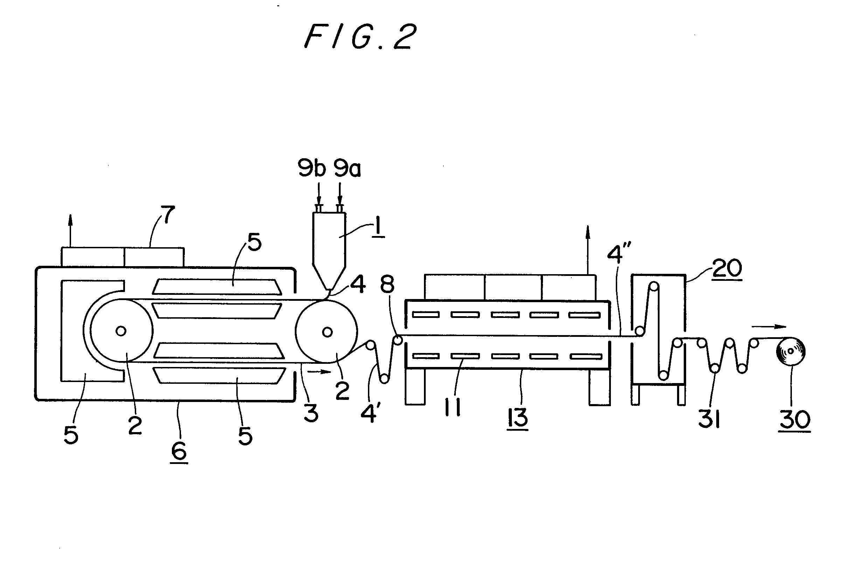

The process of the invention, for example, is carried out in the manner as shown in Fig. 2.

At first, both a first aromatic polyamic acid solution (a) and a second aromatic polyamic acid solution (b) are fed simultaneously from inlets of polymer solutions 9a and 9b, respectively, to an extrusion molding machine having an extrusion molding die 1, subsequently both the solutions are extruded continuously from an outlet of the die 1 in the form of a thin film of two layers onto an upper surface of a planar support (e.g., metallic belt) which is cyclically moved between and around a pair of drive wheels (reelers) 2. In a casting oven 6, the thin film 4 extruded on the support 3 is dried to an appropriate extent by means of a heater or a hot-air blower 5 to form a self-supportable film 4', subsequently the film is peeled from the support and finally, the self-supportable film 4' is subjected to heat treatment by passing through a curing oven 13 within which plural heaters 11 are mounted, whereby the two-layer aromatic polyimide film 4" of the invention is formed. Further, the film is cooled to room temperature (approximately 0 - 50 $^\circ$C) in a refrigeration chamber 20 and is rolled up on a wind-up roll 30 in a wind-up machine 31 (its whole appearance is not illustrated).

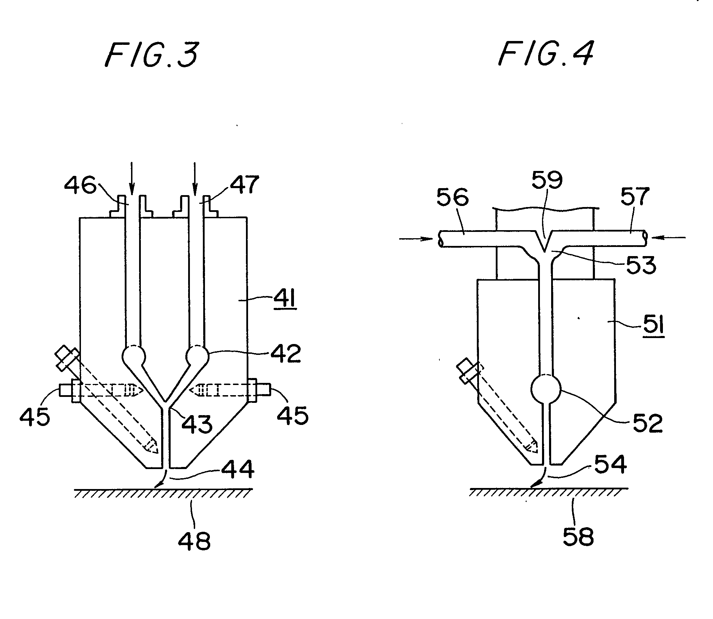

As the above extrusion molding die for the extrusion of a two-layer film, there is mentioned an example as shown in Fig. 3. In Fig. 3, the extrusion molding die is provided with inlets of polymer solutions 46 and 47 and flow paths of the polymer solutions of which each is formed from each inlet toward each manifold 42. The flow paths at the bottom of the manifold 42 join at the juncture 43, and the joined flow path (lip portion) of the polymer solution leads to an outlet 44. Thus, the extrusion molding die shown in Fig. 3 has such a structure that the polymer solution is extruded onto a support 48 in the form of a thin film (i.e., multimanifold-type two-layer die 41).

In the above die shown in Fig. 3, the lip portion has such a structure that its clearance can be adjusted with a lip set bolt. In the bottom portion of each manifold (vicinity of the juncture), the clearance of the space of each flow path is adjusted with each choke bar 45. Each of the manifolds is preferred to have a shape of a hanger coating type.

As the extrusion molding die for the extrusion of a two-layer film, there is also mentioned an example as shown in Fig. 4. In Fig. 4, the extrusion molding die is provided with inlets of polymer solutions 56 and 57 at left and right sides of its upper portion. Each of flow paths of the polymer solutions join at the juncture 53 provided with a dash board 59, and the flow path is formed so as to lead from the juncture to a manifold 52. The flow path of the bottom of the manifold 52 leads to an outlet 54 in the form of a slit. Thus, the extrusion molding die shown in Fig. 4 has such a structure that the polymer solution is extruded onto a support 58 in the form of a thin film (that is, two-layer die or single manifold-type two-layer die 51).

In the present invention, by using an extrusion molding die for a three-layer film instead of the above-mentioned die for a two-layer film, an extruded multi-layer polyimide film having two thin layers B and B' on both sides of a base layer A may be produced in the same manner as in the above-mentioned two-layer extrusion molding (see Example 4).

In the process of the invention, each of the above-mentioned first and second polyamic acid solutions (a) and (b) may be a polyamic acid (aromatic polyimide precursor) solution comprising an aromatic polyamic acid derived from the above-mentioned aromatic tetracarboxylic acid compound and the above-mentioned aromatic diamine, and an organic solvent. The polyamic acid solution preferably contains the polyamic acid in an amount of 5 to 40 weight %, more preferably in an amount of 10 to 30 weight %, Further, a viscosity of the solution (revolution viscosity) preferably has a value in the range of approx. 50 to approx. 10,000 poise at 30 °C, more preferably 100 to 6,000 poise.

The logarithmic viscosity of the above aromatic polyamic acid preferably is in the range of 0.5 to 6, more preferably 1.0 to 5, and most preferably 1.5 to 4. The logarithmic viscosity is measured at 30 °C at concentration of 0.5 g/100 ml (acid/solvent, solvent: N-methyl-2-pyrrolidone). Examples of the solvents include amide-type organic solvent such as N-methyl-2-pyrrolidone, N,N-dimethylacetamide, N,N-diethylacetamide, N,N-dimethylformamide and N,N-diethylformamide; and mixed solvents thereof (whose main component is the amide-type organic solvent).

In the process of the invention, when the polyamic acid solution is extruded from the multi-layer extrusion die in the procedure of the extrusion molding of a multi-layer film such as a two-layer or a three-layer film, the solution preferably has a temperature in the range of 0 to 150 °C, more preferably 5 to 100 °C, and most preferably 10 to 60 °C. When the thin film of the extruded polymer solution is extruded, the solution preferably has a temperature (casting temperature) in the range of 100 to 180 °C and more preferably 120 to 150 °C.

In the process of the invention for the production of the multi-layer extruding polyimide film, a rate of thickness of the base layer A to that of the thin layer B is controlled by adjusting an amount of each polymer solution extruded from the extrusion molding die for a multi-layer film such as a two-layer or three-layer film.

The extruded thin layer film (film of multi-layer such as two-layer or three-layer) of the polymer solution is preferably dried at a temperature in the range of 100 to 180 °C and more preferably 120 to 160 °C. The drying period preferably is in the range of 1 to 60 minutes and more preferably 5 to 30 minutes.

The self-supportable film as dried above is peeled from a support. The peeled film is subjected to heat treatment. The temperature of the heat treatment is preferably in the range of 250 to 600 °C and more preferably 300 to 550 °C. The treatment period preferably is in the range of about 1 to 60 minutes and more preferably about 2 to 30 minutes. Such heating conditions are preferable for imidization of the polymer and removing of solvent from the film.

In the process for producing the extruded multi-layer extruding polyimide film according to the invention, a feed rate (moving rate of a support) preferably is in the range of 0.1 to 10 m/min. and more preferably 0.2 to 5 m/min. In this manner, an extruded multi-layer aromatic polyimide film having characteristics as previously described can be continuously produced.

Examples

Examples of the present invention, a comparison example and reference examples are given below to further explain the invention.

The measurement tests for evaluating films obtained in the examples and comparison example were conducted in the following manner.

Tensile test was conducted in accordance with ASTM D882 to measure tensile strength, elongation (rupture point) and elasticity modulus.

Shrinkage factor on heating was determined by measuring a rate of change in dimension when a film sample was heated at 400 °C for 2 hours and subsequently cooled.

Thermal expansion coefficient was determined by measuring the thermal expansion of a film sample subjected to heat-treatment at 400 °C over the temperature range of 25 to 300 °C.

Extent of curl was determined in accordance with "Toray method" in which a sample of a film having length of 20 cm and breadth of 3.5 cm was placed on a planner support and a maximum distance (height) between the surface of the support and the reverse side of the sample was measured.

Adhesion strength was determined by measuring peeling strength of a copper-clad polyimide film as follows.

A copper foil of thickness of 35 μm was placed on a sample film via an epoxy-type resin adhesive (TE-5701 available from Toray Co., Ltd.), and they were heated at about 180 °C to be combined with each other, whereby a copper-clad polyimide film was produced. The peeling strength of the copper-clad polyimide film was measured in accordance with T-peel method.

Reference Example 1

3,3',4,4'-Biphenyltetracarboxylic dianhydride (aromatic tetracarboxylic acid compound) and p-phenylene-diamine (aromatic diamine) were mixed in N,N-dimethylacetamide. The mixture was copolymerized at a polymerization temperature of 30 °C to prepare an aromatic polyamic acid solution (a) (concentration of polymer: 18 weight %, logarithmic viscosity: 4.0 (at 30 °C), solution viscosity (revolution viscosity, at 30 °C): about 5,000 poise).

Reference Example 2

3,3',4,4'-Biphenyltetracarboxylic dianhydride (aromatic tetracarboxylic acid compound) and 4,4'-diaminodiphenylether (aromatic diamine) were mixed in N,N-dimethylacetamide. The mixture was copolymerized at a polymerization temperature of 30 °C to prepare an aromatic polyamic acid solution (b) (concentration of polymer: 18 weight %, logarithmic viscosity: 3.8 (at 30 °C), solution viscosity (revolution viscosity, at 30 °C): about 4,500 poise).

Example 1

Using the casting machine as shown in Fig. 2 provided with the two layer extrusion molding die (multiminifold-type two-layer die) shown in Fig. 3, a polyimide film was produced as follows.

The above-mentioned aromatic polyamic acid solution (a) and (b) both were fed from inlets for polymer solution 9a and 9b simultaneously to an extrusion molding machine having an extrusion molding die 1.

Subsequently both solutions were extruded continuously from an outlet of the die 1 in the form of a thin film of two layers on a planar support of a metallic belt which was moved and wound up around a pair of drive wheels (reelers) 2. The extruding temperature was 30 °C. In a casting oven 6, the thin film 4 extruded on the support 3 is dried by means of a hot-air blow-off equipment 5 at about 140 °C for 6 minutes to form a self-supportable film 4' (solvent content: not more than 40 weight %), and subsequently the film was peeled from the support.

Finally, the self-supportable film 4' was passed through a curing oven 13 within which plural heaters were mounted, whereby the film was heated over the temperature range increasing stepwise from 150 to 450 °C for 4 minutes to form the extruded two-layer aromatic polyimide film 4".

Further, the film was cooled to room temperature in a refrigeration chamber 20 and wound up on a wind-up roll 30 in a wind-up machine 31 (its whole appearance is not illustrated), whereby an aromatic polyimide film having a thickness of 31.3 μm was produced.

A feed rate (moving rate of support) in the above process was 0.3 m/min.

Observation of the molded two-layer aromatic polyimide film through an electron microscope revealed that a thin layer B of 5.2 μm having belt area comprising scales was positioned in the vicinity of a base layer A having thickness of 26.1 μm as shown in Fig. 1 (a).

The extruded two-layer aromatic polyimide film in Example 1 was subjected to the above tests such as tensile test. The results were set forth in Table 1.

Examples 2 and 3

The extruded two-layer aromatic polyimide films were prepared in the same manner as described in Example 1 except that the thickness of the base layer A and that of the thin layer B were changed to the thickness set forth in Table 1 by varying the extrusion amounts (extruder output) of the aromatic polyamic acid solutions.

A sectional electron micrograph (10,000 times) of the two-layer aromatic polyimide film obtained in Example 2 is shown in Fig. 1 (b). A sectional electron micrograph (10,000 times) of the two-layer aromatic polyimide film obtained in Example 3 is shown in Fig. 1 (c).

The extruded two-layer aromatic polyimide films in Example 2 and 3 were subjected to the above tests such as tensile test. The results were set forth in Table 1.

Example 4

An extruded three-layer aromatic polyimide film was prepared in the same manner as described in Example 1 except for adopting the following conditions.

A casting machine used was the same machine as shown in Fig. 2 except for changing a two-layer extrusion molding die into a three-layer extrusion molding die (multimanifold type three-layer extrusion die). A polyamic acid solution (a) prepared in Reference Example 1 was fed to an inner layer part (inlet) of the three-layer extrusion molding die, and a polyamic acid solution (b) prepared in Reference Example 2 was fed to two outer layer parts (inlet) at both sides of the three-layer extrusion molding die.

The physical properties of the above extruded three-layer aromatic polyimide films are set forth in Table 1.

Comparison Example 1

An extruded single-layer aromatic polyimide film was prepared in the same manner as described in Example 1 except for adopting the following conditions.

A casting machine used was the same machine as shown in Fig. 2 except for changing a two-layer extrusion molding die into a single-layer extrusion molding die . As the polyamic acid solution, a polyamic acid solution (a) prepared in Reference Example 1 only was used.

The results of evaluation on the above extruded single-layer aromatic polyimide films are set forth in the following Table 1.

Table 1

| | Ex. 1 | Ex. 2 | Ex. 3 | Ex. 4 | Com.Ex. 1 |
|---|---|---|---|---|---|
| **Thickness of Multi-layer film** | | | | | |
| (Number of layers) | (2) | (2) | (2) | (3) | (1) |
| Total          (μm) | 31.3 | 26.0 | 30.7 | 28.8 | 24.6 |
| Base layer A (μm) | 26.1 | 24.9 | 30.5 | 27.6 | - - - |
| Thin layer B (μm) | 5.2 | 1.1 | 0.2 | 0.6 | - - - |
| Thin layer B' (μm) | - - - | - - - | - - - | 0.6 | - - - |
| **Tensile test (TD)** | | | | | |
| Tensile strength (kg/mm$^2$) | 33.3 | 45.9 | 41.5 | 42.5 | 35.0 |
| Elongation       (%) | 34 | 44 | 39 | 40 | 29 |
| Elasticity modulus (kg/mm$^2$) | 743 | 799 | 876 | 883 | 914 |
| **Shrinkage factor** (TD)          (%) | 0.15 | 0.17 | 0.15 | 0.18 | 0.16 |
| **Thermal expansion coefficient** (TD×$10^{-5}$ cm/cm/°C) | 2.10 | 1.68 | 1.36 | 1.26 | 1.20 |
| **Extent of curl** (Toray method)(mm) | 12 | 1 | 2 | 1 | 5 |
| **Adhesion strength** (B, side) (kg/cm) | 0.90 | 0.80 | 0.88 | 0.85 | 0.09 |

## Claims

1. An extruded multi-layer polyimide film which comprises:
   at least one thin layer with a thickness of not more than 10 μm comprising an aromatic polyimide derived from an aromatic tetracarboxylic acid compound and an aromatic diamine having two or more benzene rings; and
   a base layer comprising an aromatic polyimide derived from a biphenyltetracarboxylic acid compound and a phenylene diamine,

the at least one thin layer being unitarily arranged on at least one side of the base layer.

2. The extruded multi-layer polyimide film as claimed in claim 1, wherein the thin layer has a thickness in the range of 0.05 to 8 $\mu$m.

3. The extruded multi-layer polyimide film as claimed in claim 1, wherein the polyimide film has a thickness in the range of 10 to 200 $\mu$m.

4. The extruded multi-layer polyimide film as claimed in claim 1, wherein the rate of thickness of the thin layer and that of the base layer is in the range of 0.005 to 0.5.

5. The extruded multi-layer polyimide film as claimed in claim 1, wherein an aromatic tetracarboxylic acid compound of the thin layer is 3,3',4,4'-biphenyltetracarboxylic acid or dianhydride thereof.

6. The extruded multi-layer polyimide film as claimed in claim 1, wherein an aromatic diamine of the thin layer is 4,4'-diaminodiphenylether.

7. A process for producing an extruded multi-layer polyimide film comprising the steps of:
feeding both a first aromatic polyamic acid solution and a second aromatic polyamic acid solution simultaneously to an extrusion molding machine having an extrusion molding die which is capable of forming two or more layers, the first aromatic polyamic acid solution comprising an aromatic polyamic acid dissolved uniformly in a solvent, said aromatic polyamic acid being derived from an aromatic tetracarboxylic acid compound and an aromatic diamine having two or more benzene rings, and the second aromatic polyamic acid solution comprising an aromatic polyamic acid dissolved uniformly in a solvent, said aromatic polyamic acid being derived from a biphenyltetracarboxylic acid compound and a phenylene diamine;
extruding continuously both the solutions from an outlet of the die in the form of a thin film of at least two layers onto a planar support;
drying the extruded thin film on the support to form a self-supportable multi-layer film;
peeling the multi-layer film from the support; and
subjecting the multi-layer film to heat-treatment.

8. The process as claimed in claim 7, wherein each of the first and second aromatic polyamic acid solutions has a solution viscosity in the range of 50 to 10,000 poise at 30 °C.

9. The process as claimed in claim 7, wherein the extruded thin layer is dried at a temperature in the range of 100 to 180 °C.

10. The process as claimed in claim 7, wherein the heat-treatment is conducted at a temperature in the range of 250 to 600 °C.

*FIG.Ia*

X 10,000

*FIG.Ib*

X 10,000

*FIG.Ic*

X 10,000

# FIG.2

EP 0 431 636 A1

# FIG.3

46   47
41
42
45   45
43
44
48

# FIG.4

56   59   57
53
51
52
54
58

EP 0 431 636 A1